# EUROPÄISCHE PATENTSCHRIFT

(11) **EP 3 672 786 B1**
(45) Veröffentlichungstag und Bekanntmachung des Hinweises auf die Patenterteilung: **17.11.2021**
(21) Anmeldenummer: 18755464.7
(22) Anmeldetag: 14.08.2018
(51) Int. Cl.: B29C 65/20, E06B 3/96, B29K 27/06, B29K 101/12

(54) **VERFAHREN UND VORRICHTUNG ZUM VERBINDEN VON PROFILTEILEN**
METHOD AND DEVICE FOR CONNECTING PROFILED PARTS
PROCÉDÉ ET DISPOSITIF POUR RELIER DES PIÈCES PROFILÉES

(30) Priorität: 21.08.2017 DE 102017119006
(43) Veröffentlichungstag der Anmeldung: 01.07.2020
(73) Patentinhaber: Rotox Besitz- und Verwaltungsgesellschaft mbH, 65611 Brechen (DE)
(72) Erfinder:
(74) Vertreter: Müller, Eckhard
(86) Internationale Anmeldenummer: PCT/EP2018/072056
(87) Internationale Veröffentlichungsnummer: WO 2019/038144

(56) Entgegenhaltungen:
- DE-A1-102015 013 439
- DE-A1-102015 107 121

## Beschreibung

Die Erfindung betrifft ein Verfahren zum Verbinden von Profilteilen gemäß dem Oberbegriff des Anspruchs 1. Ferner betrifft die Erfindung eine Vorrichtung nach dem Oberbegriff des Anspruchs 9 zum Verbinden von Profilteilen.

Verfahren und Vorrichtungen in der eingangs genannten Art sind beispielsweise aus der DE 10 2015 107 121 A1 bekannt und werden insbesondere zum Verschweißen von PVC-Profilstäben zu Fensterrahmen, Fensterflügeln oder Türrahmen verwendet. Hierzu werden die Profilstäbe vor dem Verschweißen auf jeweils erforderliche Längen abgelängt, um die Profilteile anschließend an den die Fügeflächen bildenden Schnittflächen durch Verschweißen zu verbinden. Die Profilteile können erforderlichenfalls auf Gehrung geschnitten werden, so dass die Gehrungsschnittflächen die Fügeflächen bilden.

Das eigentliche Verschweißen der Profilteile im Sinne der vorliegenden Erfindung erfolgt durch Anschmelzen und anschließendes Fügen der Fügeflächen an den Profilstabenden. Hierzu werden die zu verschweißenden Profilteile zunächst in eine entsprechende Spannvorrichtung eingelegt und mit Hilfe von Anschlägen und Führungen in der Vorrichtung und zueinander positioniert. Daraufhin wird der durch die Fügeflächen gebildete Schweißbereich für den sogenannten Angleich- und Anwärmprozess gegen die Heizfläche eines Heizelementes der Schweißvorrichtung gedrückt, wobei Material des Profilteils an der Fügefläche, also im Schweißbereich, geschmolzen wird. Danach erfolgt das sogenannte Umstellen und Fügen. Dabei wird das Heizelement zwischen den Profilteilen entfernt und die Profilteile werden mit ihren angeschmolzenen Fügeflächen in Fügerichtung aufeinander zubewegt und gegeneinander gepresst. Der dabei noch heiße, vorzugsweise thermoplastische Werkstoff der beiden Profilstabenden bildet nach dem Erkalten eine stabile Schweißverbindung. Ein solcher Verfahrensablauf ist beispielsweise einleitend in der DE 10 2012 112 533 A1 erwähnt.

In der DE 10 2012 112 533 A1 finden auch die von der vorliegenden Erfindung mit umfassten Parallelschub- und Diagonalschubverfahren Erwähnung. Bei dem Parallelschubverfahren bewegen sich die anzuschmelzenden Gehrungs- bzw. Fügeflächen während des Schmelzprozesses von beiden Seiten gleichmäßig auf die Heizflächen des mittig feststehenden Heizelementes zu, wobei die Bewegung der Profilteile beispielsweise gegenläufig und senkrecht zu den Gehrungsschnittflächen oder senkrecht zur Längsachse des Profilteils erfolgen kann. Bei dem Diagonalschubverfahren dagegen ist eines der Profilteile feststehend positioniert, während das andere Profilteil als auch das Heizelement in Längsrichtung des feststehenden Profilteils bewegt wird.

Aus der DE 20 2015 000 908 U1 ist eine Vorrichtung zum Verschweißen zweier Kunststoffprofile, bestehend aus zwei für den Schweißvorgang in Pressrichtung relativ gegeneinander bewegbaren Spanneinheiten bekannt.

Aus der DE 10 2015 013 439 A1 ist ein Verfahren zum Verschweißen von zwei hohlen Profilstäben aus Kunststoff zur Bildung eines Fensterrahmens bekannt. Die miteinander zu verbindenden Profilstäbe werden durch Einfügen eines Schweißspiegels zwischen deren Verbindungsflächen und Anpressen derselben an den Schweißspiegel unter Bildung eines Schweißwulstes auf eine vorgegebene Temperatur erhitzt und nach dem Entfernen des Schweißspiegels bei gleichzeitiger Vergrößerung des Schweißwulstes unter Druck zusammengefügt. Nach dem Entfernen des Schweißspiegels werden die an den Sichtflächen des späteren Fensterrahmens im Bereich der Verbindungsstellen der beiden Profilstäbe entstandenen äußeren Teile der Schweißwülste nach innen gepresst. Danach wird der Schweißspiegel erneut zwischen die Verbindungsflächen der Profilstäbe bewegt und die Verbindungsflächen werden bei gleichzeitiger Verformung der nach innen gepressten Schweißwülste nach erhitzt und schließlich werden nach dem Entfernen des Schweißspiegels die Verbindungsflächen der beiden Profilstäbe zusammengefügt.

Während des Anschmelzens an dem Heizelement beginnt das Material des Profilteils an der Fügefläche, beispielsweise PVC, zu fließen und verformt sich. Hierbei bewegt sich die Schmelze, im Weiteren als Schmelzgut bezeichnet, auch nach seitlich außen über den Rand der Fügefläche ggf. bis auf Sichtflächen des Profilteils hinaus. Um eine nach dem Fügen an der Verbindungsstelle verbleibende Schweißraupe zu vermeiden, kann das Fließen des Schmelzgutes vor und/oder während des Fügens gezielt beeinflusst werden. Dazu kann das jeweilige Profilbauteil bei bekannten Verfahren mit Begrenzungselementen, wie zum Beispiel Begrenzungsmessern, eingeengt werden, um ein Austreten von Schmelzgut herabzusetzen oder zu verhindern. Bei bekannten Vorrichtungen sind derartige Begrenzungselemente jedoch bei dem Schweißprozess selbst unbeweglich mit den Profilträgern verbunden. Andere bekannte Vorrichtungen weisen Formteile auf, die vor und/oder während des Fügens zur Beeinflussung des Schmelzgutes bewegt werden können. Jedoch verbleibt dennoch oftmals ein zu großer Spalt zwischen dem Begrenzungselement und dem Profilteil, durch den die Schmelze fließen kann. Diese nach außen gedrückte Schmelze erstarrt im anschließenden Fügeprozess, so dass sich dennoch eine Schweißraupe bilden kann, die sich häufig farblich auch von den zusammengefügten Profilteilen abhebt, insbesondere wenn diese mit einem vom Grundmaterial abweichenden Dekor beschichtet sind. Nach einer gewissen Abkühlzeit muss diese Schweißraupe in einem weiteren Arbeitsschritt von einer Nachfolgemaschine, z.B. einer mit Fräsen und/oder Messern ausgestalteten, sogenannten Putzmaschine, entfernt werden. Bei Profilbauteilen die mit einem zusätzlichen Dekor an der Sichtfläche versehen sind, muss dann noch das im Bereich der entfernten Schweißraupe fehlende Dekor in einem zusätzlichen Arbeitsschritt nachgearbeitet, kaschiert oder ergänzt werden. Dadurch erhöhen sich Fertigungsaufwand und Fertigungskosten zusätzlich.

Vor diesem Hintergrund liegt der Erfindung die Aufgabe zugrunde, ein verbessertes Verfahren nach dem Oberbegriff des Anspruchs 1 sowie eine verbesserte Vorrichtung nach dem Oberbegriff des Anspruchs 9 anzugeben, bei welchen das Auftreten einer Schweißraupe vermieden, zumindest aber deren Ausprägung wirksam verkleinert werden kann.

Die Aufgabe wird durch ein Verfahren nach Anspruch 1 sowie eine Vorrichtung nach Anspruch 9 gelöst. Die abhängigen Ansprüche betreffen vorteilhafte Ausgestaltungen der Erfindung.

Gemäß Anspruch 1 ist ein Verfahren zum Verbinden von zwei Profilteilen vorgesehen, die aus Kunststoff, insbesondere aus einem Thermoplast bestehen. Die Fügefläche des jeweiligen Profilteils, wenigstens jedoch die Fügefläche des einen Profilteils, wird zum Verbinden mit der Fügefläche des anderen Profilteils angeschmolzen. Wenigstens ein Formwerkzeug wird relativ zu dem einen Profilteil bewegt, um an wenigstens einem Kantenabschnitt der Fügefläche austretendes Schmelzgut zu verdrängen. Das wenigstens eine Formwerkzeug wird dazu um den Kantenabschnitt herum zur angeschmolzenen Fügefläche des einen Profilteils gekippt wird. Der Kantenabschnitt ist eine Übergangsstelle zwischen der Fügefläche und einer seitlichen Fläche des Profilteils und ist ein Teil der so genannten Profilkontur, die durch den äußeren Umriss des Profilteils bestimmt wird.

Anders als bei dem eingangs beschriebenen Stand der Technik erfolgt die Verdrängung des Schmelzgutes bei der Erfindung mit größerer Kontrolle über das Fließverhalten des Schmelzgutes, so dass das unerwünschte Austreten von Schweißgut und die Ausbildung einer Schweißraupe besser unterdrückt bzw. kompensiert werden können. Das vorliegende Verfahren kann insbesondere eingesetzt werden, um die Ausbildung von Schweißraupen an den Profilaußenecken zu beeinflussen. Besonders bevorzugt handelt es sich um ein Verfahren zum Fügen von Profilteilen an einem Fenster- oder Türflügel. Bei derartigen Produkten wird großer Wert auf eine ästhetische Qualität der von außen sichtbaren Kanten gelegt.

Die Kippachse, um die das Formwerkzeug zur Fügefläche gekippt wird, liegt dabei in oder zumindest in unmittelbarer Nähe und parallel zu der Ebene der Fügefläche. Das Formwerkzeug führt hierdurch eine Bewegung aus, bei welcher es zu keiner oder nur einer sehr geringen Spaltbildung zwischen dem Formwerkzeug und dem Profilteil kommt, so dass kaum Schmelzgut zwischen dem Formwerkzeug und dem nicht angeschmolzenen Bereich des Profilteils hindurchtreten kann. Das Formwerkzeug liegt bevorzugt mit der in Ausgangsstellung dem Profilteil zugewandten Fläche an dem Profilteil an und gleitet daran entlang. Ein ggf. zwischen Formwerkzeug und Profilteil vorliegender Abstand wird auf kleiner als 0,5 mm eingestellt, sodass es maximal zu einer diesem Maß entsprechenden Spaltbildung kommt. Die Kippbewegung des Formwerkzeugs drängt auch nach außen getretenes Schmelzgut wieder zurück auf die Trägerfläche.

Für ein effektives Verdrängen des Schmelzgutes wird in unregelmäßig oder nicht gerade ausgeformten Bereichen der Außenkontur des Profils bzw. der Profilkontur ein Abschnitt oder ein Bereich ausgewählt, durch den die Kippachse verläuft oder an dem die Kippachse tangential anliegt, so dass mit jedem Kippen des Formwerkzeugs möglichst viel Schmelzgut auf die Fügefläche verlagert werden kann.

Das Ausführen einer Kippbewegung um den Kantenbereich des Profilteils herum bewirkt zudem eine verhältnismäßig kleine Relativbewegung zwischen Formwerkzeug und Profilteil in der Nähe des Kantenbereiches. Diese Relativbewegung wird in Radialrichtung nach außen größer, so dass in der Nähe der späteren Sichtkante befindliche Schmelzgut weniger stark umgeformt wird, als das Schmelzgut, welches auf die Fügefläche durch Umklappen oder Umschlagen verdrängt wird.

Es kann dabei vorgesehen sein, dass das wenigstens eine Formwerkzeug um eine Achse gekippt wird, die abschnittsweise mit einer die äußere Querschnittsform des Profilteils bestimmenden Profilkontur im Wesentlichen zusammenfällt oder tangential dazu verläuft. Auf diese Weise kann die Spaltbildung zwischen dem Formwerkzeug besonders gut eingestellt werden. Gleichzeitig erfolgt die Verdrängung des Schmelzgutes sehr gleichmäßig.

In Weiterbildung der Erfindung kann das wenigstens eine Formwerkzeug vor dem Ausführen der Kippbewegung zusätzlich eine Linearbewegung in Richtung der Fügefläche ausführen. Insbesondere kann diese zusätzliche Linearbewegung derart erfolgen, dass sich das wenigstens eine Formwerkzeug an dem wenigstens einen Profilteil stirnseitig über die Fügefläche hinausbewegten, um das Schmelzgut in Richtung auf die Fügefläche zu verdrängen. Aufgrund der Linearbewegung wird das Schmelzgut bereits zu einem gewissen Grad in Richtung der Fügefläche verdrängt, so dass es sich für das weitere Umklappen bzw. Umschlagen durch das Formwerkzeug vollständig oder nahezu vollständig vor einer Formfläche des Formwerkzeuges befindet. Das Schmelzgut liegt dann vor der Formfläche und wird beim Verkippen des Formwerkzeugs durch diese weiter verdrängt bzw. umgeklappt oder umgeschlagen.. Durch diese Maßnahme kann der erforderliche Kippwinkel des Formwerkzeugs kleiner ausfallen. Außerdem kann bereits auf die Profiloberfläche ausgetretenes Schmelzgut wieder vor die Fügefläche zurückgedrängt werden.

In Ergänzung dieses Gedankens kann die Linearbewegung des Formwerkzeuges entlang einer äußeren Profiloberfläche erfolgen. Insbesondere kann die Linearbewegung in einer Längsrichtung des Profilteils erfolgen. Hierdurch lässt sich während des Anschmelzvorgangs austretendes Schmelzgut besonders wirksam verdrängen bzw. zurückdrängen.

Bei der Ausführung der Linearbewegung und der Kippbewegung des wenigstens einen Formwerkzeuges kann zum einen vorgesehen sein, dass diese Bewegungen wenigstens teilweise einander überlagern. Zum anderen kann vorgesehen sein, dass sie nacheinander erfolgen. Dabei erfolgt vorzugsweise zunächst die Linienbewegungdes Formwerkzeugs bevor es gekippt wird. Eine gleichzeitige, also überlagerte Bewegung des Formwerkzeugs in linearer Richtung und in Kipprichtung lässt sich mit einfacheren mechanischen Vorkehrungen verwirklichen. Demgegenüber hat eine sequentielle Abfolge der Linearbewegung und der Kippbewegung den Vorteil, dass die Verdrängung des Schmelzgutes besonders kontrolliert erfolgen kann.

In einer bevorzugten Ausgestaltung der Erfindung kann vorgesehen sein, dass das wenigstens eine Formwerkzeug soweit kippt, dass zwischen der Fügefläche und der der Fügefläche zugewandten Formfläche des Formwerkzeugs ein spitzer Winkel a verbleibt. Es hat sich herausgestellt, dass hierdurch die Ausbildung einer Schweißraupe durch nach außen tretendes Schmelzgut sehr wirksam unterbunden werden kann. Es hat sich gezeigt, dass in Ausführung der Erfindung bevorzugte Bereiche von 20° ≥ a ≤ 45°, besonders bevorzugt 25° ≥ a ≤ 40°, insbesondere a = ca. 30° gelten.

Wenn der Winkel a in Richtung des Kantenabschnitts spitz zuläuft, in der Nähe des Kantenabschnittes weniger Schmelzgut als in den weiter innen liegenden, zentralen Bereichen der Fügefläche. Somit ist in der Nähe des Kantenbereiches eine ausreichend große, für das spätere Fügen erforderliche Menge an Schmelzgut vorhanden, jedoch nur so wenig, dass kaum oder kein Schmelzgut beim nachfolgenden Stauchen an dem Kantenbereich der Fügeflächen der Fügepartner austritt.

In einer besonders vorteilhaften Variante der Erfindung kann das wenigstens eine Formwerkzeug aus seiner das Schmelzgut verdrängenden Arbeitsstellung in eine Ausgangsstellung zurück bewegt werden, um die Fügefläche des zumindest einen Profilteils erneut anzuschmelzen. Vor allem wird hierdurch sichergestellt, dass das Schmelzgut eine ausreichende Temperatur für das anschließende Fügen aufweist. Entsprechend hat die mit dem Verdrängen des Schmelzgutes einhergehende zeitliche Verzögerung zwischen Anschmelzen und Fügen keine oder nur unwesentliche Auswirkungen auf die Festigkeit der späteren Fügeverbindung.

Zudem kann vorgesehen sein, das wenigstens eine Formwerkzeug nach dem erneuten Anschmelzen wieder in seine Arbeitsstellung zu bewegen, um das Schmelzgut erneut in Richtung auf die Fügefläche des Profilteils umzulegen. Es hat sich gezeigt, dass eine Wiederholung des Anschmelzens gefolgt vom Verdrängen des Schmelzgutes gemäß der Erfindung in ihrer einfachsten Form zu deutlich besseren Ergebnissen und einer höheren Produktqualität führten. In einer besonderen Ausgestaltung der Erfindung kann der Kippwinkel des Formwerkzeug variiert werden kann, also gegenüber dem vorangegangenen Verdrängungsvorgang größer oder kleiner ausfallen. Auf diese Weise kann die Menge des beim erneuten Anschmelzvorgang nach außen tretenden Schmelzgutes beeinflusst werden.

Die obenstehende Aufgabe wird ferner durch eine Vorrichtung gemäß Anspruch 9 zum Verbinden von wenigstens zwei Profilteilen aus Kunststoff gelöst. Die Profilteile können insbesondere aus einem Thermoplast bestehen. Die Vorrichtung ist mit Profilträgern zum Festlegen der beiden Profilteile und einer Heizeinrichtung zum Anschmelzen wenigstens einer Fügefläche wenigstens eines Profilteils ausgebildet, wobei wenigstens ein Formwerkzeug vorgesehen ist, das aus einer Ausgangsstellung in Richtung zu einer Arbeitsstellung relativ zu zumindest einem der Profilteile bewegbar ist, um an wenigstens einem Kantenabschnitt der Fügefläche austretendes Schmelzgut zu verdrängen. Die erfindungsgemäße Vorrichtung zeichnet sich besonders dadurch aus, dass das wenigstens eine Formwerkzeug aus seiner Ausgangsstellung zur Fügefläche des einen Profilteils um den Kantenabschnitt des Profilteils herum kippbar ist. Durch eine derartige Ausgestaltung ergeben sich die im Zusammenhang mit dem erfindungsgemäßen Verfahren erreichten Vorteile. Die Vorrichtung kann insbesondere zur Durchführung des erfindungsgemäßen Verfahrens in einer der vorstehend beschriebenen Varianten ausgebildet sein.

Die Vorrichtung kann ferner so ausgebildet sein, dass das wenigstens eine Formwerkzeug zusätzlich linearbeweglich geführt ist, so dass die vorstehend beschriebene Linearbewegung ausführbar ist. Dies kann zusätzlich auch zum Verlagern der Kippachse des Formwerkzeugs zur oder in die Fügefläche hinein dienen.

Gemäß einer vorteilhaften Ausgestaltung der Erfindung kann das Formwerkzeug in einer an dem Profilträger vorgesehenen Kulissenführung geführt sein. Dies lässt einen einfachen Aufbau der erfindungsgemäßen Vorrichtung zu, um die erforderlichen Bewegungen des Formwerkzeuges zu ermöglichen. Für die Zwecke der vorliegenden Erfindung hat sich die Verwendung einer Kulissenführung mechanisch als besonders zuverlässig erwiesen.

Bevorzugt kann das wenigstens eine Formwerkzeug mittels eines Aktuators, insbesondere eines Linearaktuators, bewegbar ausgebildet sein. Linearaktuatoren können vorteilhafterweise längs der Profilaufnahme und somit raumsparend angeordnet werden. Außerdem ist der Aufwand zur Ansteuerung solcher Aktuatoren meist gering. Beispielsweise können pneumatisch, hydraulisch, aber auch elektrisch betriebene Linearaktuatoren Verwendung finden. Alternativ kann das Formwerkzeug durch eine Kopplung mit einer Mitnahmebewegung des Profilträgers betätigbar sein. Auf diese Weise kann eine Rückzugsbewegung des Profilträgers beim Entfernen des Profilteils von der Heizeinrichtung mechanisch abgegriffen werden, um das wenigstens eine Formwerkzeug zu betätigen. Durch eine derartige Kopplung werden steuerungsbedingte Fehlfunktionen der Vorrichtung vermieden. Zudem kann auf zusätzliche Aktorik zur Ansteuerung des Formwerkzeugs zumindest teilweise verzichtet werden.

Das wenigstens eine Formwerkzeug kann ferner bereichsweise, insbesondere an seiner der Heizeinrichtung zugewandten Seite, beheizt sein, um eine Anhaftung durch daran erkaltendem Schmelzgut zumindest weitgehend zu vermeiden. Hierbei haben sich Temperaturbereiche von vorzugsweise 80° C bis 280° C, bevorzugt 140°C bis 210°C, besonders bevorzugt 150°C als vorteilhaft herausgestellt. Das Beheizen des Formwerkzeugs kann durch eine an oder im Formwerkzeug vorgesehene Heizeinheit erfolgen. Alternativ kann das Beheizen auch durch eine direkte Anlage des Formwerkzeugs an dem Heizelement der Heizeinrichtung erfolgen, mittels welcher auch die Fügefläche des Profilteils zum Anschmelzen erwärmt wird.

Letzteres kann insbesondere dadurch eine Variante der Vorrichtung ermöglicht werden, bei welcher das Formwerkzeug wenigstens eine Profilanlageseite und eine der Heizeinrichtung zugewandte Seite aufweist, die beim Anschmelzvorgang neben der Fügefläche des Profilteils an der Heizeinrichtung zu liegen kommt.

Die der Heizeinrichtung zugewandte Seite und die Profilanlageseite können bevorzugt unter dem zwischen einer Längsrichtung des Profilteils und der Fügefläche des Profilteils eingeschlossenen Gehrungswinkel verlaufen. Hierdurch kann ein seitliches Austreten von Schmelzgut besonders gut beeinflusst werden.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Es zeigen:
- Fig. 1: eine schematische Perspektivansicht der erfindungsgemäßen Vorrichtung,
- Figur 2: eine weitere Ansicht der erfindungsgemäßen Vorrichtung,
- Figur 3a: eine schematische Perspektivansicht auf die erfindungsgemäße Vorrichtung,
- Figur 3b: eine Seitenansicht basierend auf Figur 3a,
- Figur 4a: eine schematische Perspektivansicht der erfindungsgemäßen Vorrichtung in einem ersten Verfahrensschritt,
- Figur 4b: eine Seitenansicht basierend auf Figur 4a,
- Figur 5a: eine schematische Perspektivansicht der erfindungsgemäßen Vorrichtung in einem weiteren Verfahrensschritt,
- Figur 5b: eine Seitenansicht basierend auf Figur 5a,
- Figur 6a: eine schematische Perspektivansicht der erfindungsgemäßen Vorrichtung in einem weiteren Verfahrensschritt,
- Figur 6b: eine schematische Seitenansicht basierend auf 6a,
- Figur 7: eine schematische Seitenansicht der erfindungsgemäßen Vorrichtung,
- Figuren 8a und 8b: ein Formwerkzeug mit Kulissenführung in schematischer Darstellung,
- Figur 9: eine schematische Darstellung des Verfahrensablaufs gemäß der Erfindung,
- Figur 10: eine Seitenansicht eines Formwerkzeugs gemäß der Erfindung und
- Figur 11: eine schematische Darstellung einer beispielhaften Profilkontur eines zufügenden Profilteils.

Gleiche oder gleichwirkende Bauteile sind in den nachfolgend dargestellten Figuren anhand eines Ausführungsbeispiels mit gleichen Bezugszeichen versehen, um die Lesbarkeit zu verbessern.

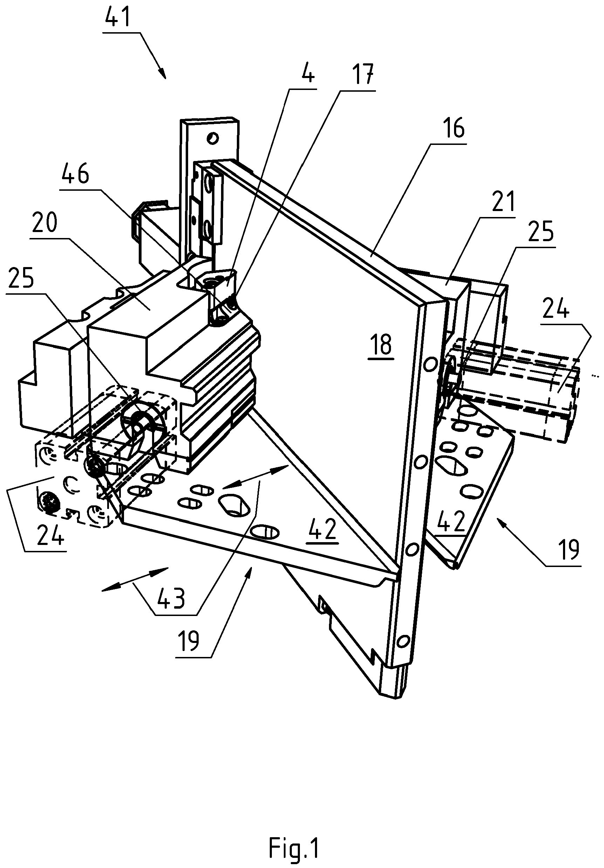

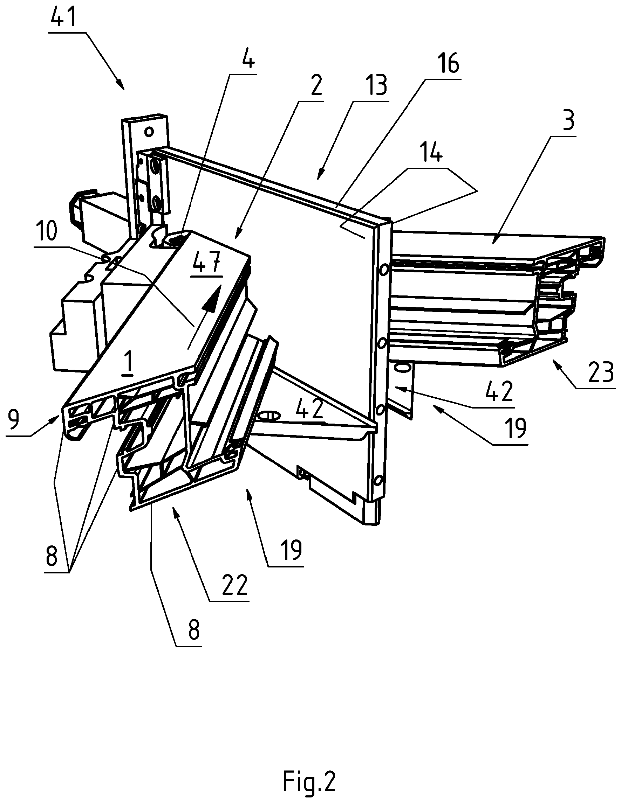

Figur 1 zeigt eine erfindungsgemäße Vorrichtung in Form eines Schweißapparates 41 mit Profilauflagen 42. Wie in der Figur 2 gezeigt ist, sind zu fügenden Profilteile 1, 3 auf die Profilauflagen 42 auflegbar und mittels Profileinspannungen 20, 21 daran festlegbar. Die Profilauflagen 42 sind zum Ausführen von Ein- und Ausfahrbewegungen 43 beweglich zueinander angeordnet, um die Profilteile 1, 2 beim Ausführen des Fügeverfahrens zunächst gegen ein Heizelement 14 einer Heizeinrichtung 16 und anschließehnd zum Fügen gegeneinander zu stauchen. Die Profilauflagen 42 und die Profileinspannungen 20, 21 bilden dabei einen Teil eines Profilträgers 19, der noch weitere Einrichtungen zum Festlegen der Profilteile 1, 3 aufweisen kann. Diese sind zur besseren Übersichtlichkeit hier nicht dargestellt sind.

An den Profileinspannungen 20, 21 ist jeweils wenigstens ein Formwerkzeug 4 angeordnet, welches mittels jeweils eines Aktuators 24 und einer den Aktuator 24 und das Formwerkzeug 4 verbindenden Schubstange 25 bewegt werden kann. Die Aktuatoren können beispielsweise rotatorische Elektromotoren sein, welche die Schubstange 25 mittels eines Spindeltriebes bewegen. Alternativ können die Aktuatoren 24 auch als elektrische, pneumatische oder hydraulische Linearaktuatoren ausgebildet sein, die auf die Schubstange 25 wirken. Die Schubstange 25 ist jeweils mit einer Führung 46 für das Formwerkzeug verbunden, wobei das Formwerkzeug in der Führung um eine Drehachse 17 drehbar gelagert ist.

In der Figur 2 sind zwei Profilteile 1, 3 auf die jeweilige Profilauflage aufgelegt und mit der zugehörigen Profileinspannung 20, 21 verspannt. Die endseitigen, auf Gehrung geschnittenen Enden der Profilteile 1, 3 bilden jeweils die Fügeflächen 2, 13 der Profilteile 1,3 an welchen die beiden Profilteile 1, 3 später durch Verschweißen zusammengefügt werden.

Die Heizeinrichtung 16 mit einem oder mehreren Heizelementen 14 weist jeweils eine den Fügeflächen 2 zugewandte Heizfläche 18 auf, an denen die Profilteile 1, 3 mit der Fügefläche 2 angelegt werden, um die Profilteile 1, 3 an der Fügefläche 2anzuschmelzen. Die Fügefläche 13 des Profilteils 3 ist in der Figur 2 durch die Heizeinrichtung 16 verdeckt. An den gegenüberliegenden Enden der Profilteile 1, 3 sind ebenfalls auf Gehrung geschnittene Fügeflächen 22, 23 vorhanden, die zum Verbinden mit weiteren Profilteilen 1, 3 entweder im selben Arbeitsgang oder in einem anschließenden Arbeitsschritt dienen.

Der Schweißapparat 41 kann zusätzlich noch weitere, hier nicht dargestellte Formwerkzeuge aufweisen, die auf die Profiloberfläche 9 austretendes Schmelzgut 5 bearbeiten oder verdrängen. Beispielsweise kann auf die Sichtfläche 47 des Profilteils 1 oder des Profilteils 2 ein Werkzeug aufgelegt sein, welches für die Bearbeitung von Schmelzgut an der Fügefläche 2 vorgesehen ist.

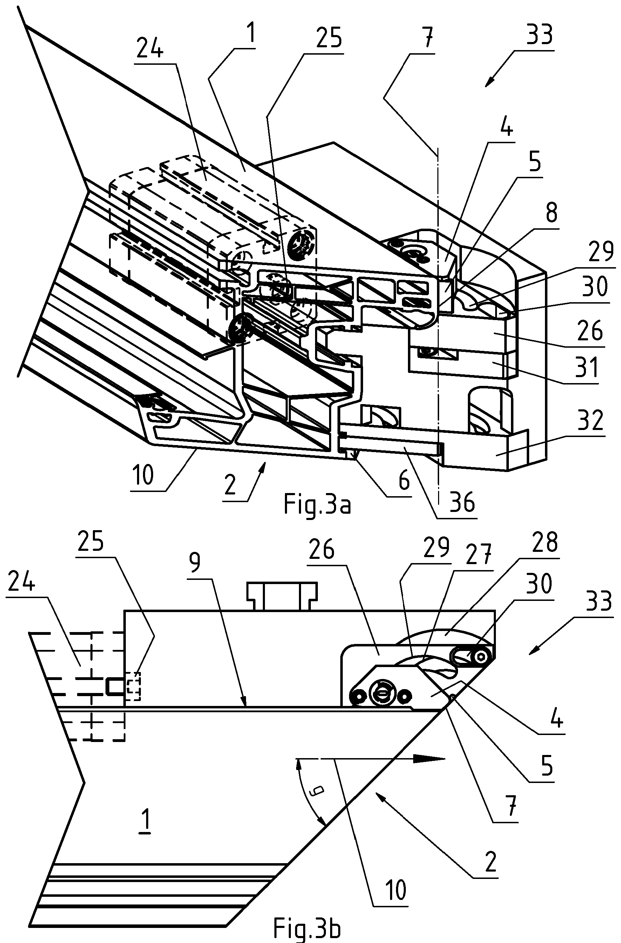

In den Figuren 3a bis 6b ist der Verfahrensablauf des erfindungsgemäßen Verfahrens dargestellt, bei welchem die Fügefläche 2 des Profilteils 1 für ein Zusammenfügen mit der Fügefläche 13 des Profilteils 3 zunächst durch Anlage der Fügefläche 2 an der Heizfläche 18 der Heizeinrichtung 16 angelegt wird. Das Profilteil 1 kann dabei beispielsweise in seiner Längsrichtung 10 gegen den Heizfläche 18 gefahren werden, so dass das thermoplastische Material des Profilteils 1 bei Kontakt mit der aufgeheizten Heizfläche 18 schmilzt. Das aufgeschmolzene Material steht dann für das spätere Fügen der beiden Profilteile 1, 3 zur Verfügung. Ein Teil des aufgeschmolzenen Materials, das Schmelzgut 5, weicht auch seitlich in Richtung der Profiloberfläche 9 aus, die eine spätere Schichtfläche 47 bildet. Im vorliegenden Beispiel schließt das Formwerkzeug 4 während des Anschmelzens unmittelbar an einen Kantenabschnitt 8 des Profilteils 1 an, so dass sich das Schmelzgut 5 entlang des Formwerkzeugs 4 weiter nach außen ausbreitet und somit kaum oder kein Schmelzgut 5 auf der Profiloberfläche 9 ablagern kann.

Das Verfahren zum Verbinden der Profilteile 1, 3 weist zunächst das bereits beschriebene Anschmelzen der Fügeflächen 2, 13 der Profilteile 1, 3 auf und schließt mit dem Fügen der Profilteile 1, 3, d. h. mit dem Aneinanderpressen der angeschmolzenen Fügeflächen 2, 13 unter Verschmelzen und Erkalten des jeweiligen Schmelzgutes ab. Eine Nachbearbeitung der aneinandergefügten Profilteile 1, 3 in Kantenbereichen 8, an denen während des Fügens Schmelzgut 5 unter Ausbildung einer Schweißraupe ausgetreten ist, müsste unter Umständen zusätzlich erfolgen. Um eine derartige Nachbearbeitung an Sichtkanten und Sichtflächen möglichst weit zu reduzieren oder sogar überflüssig zu machen, wird vor dem Fügen die nachfolgend im Zusammenhang mit den Figuren 3a bis 6b beschriebene Zwischenbearbeitung ausgeführt, durch welche das Schmelzgut 5 derart weit auf die jeweilige Fügefläche 2, 13 verdrängt und/oder umgelegt und/oder umgeklappt wird, dass kaum oder sogar kein Schmelzgut 5 in den entsprechenden Kantenbereichen 8 eine Schweißraupe verursacht.

Die Fig. 3a bis 6b geben ausschnittsweise einen vorzugsweise kontinuierlich ablaufenden Bewegungsablauf wieder, der im Weiteren näher beschrieben wird.

Die Fig. 3a und 3b geben den Zustand des Profilteils 1 unmittelbar nach dem Anschmelzen der Fügefläche 2 wieder, wobei das Heizelement 14 der Heizeinrichtung 16 bereits entfernt ist. Das Profilteil 1 wird dazu flächig an eine Heizfläche 18 angelegt und solange nachgeführt, bis der vorgesehene Abbrand angeschmolzen ist. Dabei kann das Profilteil 1 entlang seiner Längsrichtung 10 oder senkrecht zur Fügefläche 2 gegen die Heizfläche 18 gedrückt werden. Der Abbrand ist der Abschnitt des Profilteils 1, um den das Profilteil 1 aufgrund des Anschmelzens senkrecht zur Fügefläche 2 verkürzt wird. Das dabei entstehende Schmelzgut 5 lagert sich vor dem in seiner Ausgangsstellung 33 befindlichen Formwerkzeug 4 an. Im vorliegenden Beispiel liegt das Formwerkzeug 4 mit seiner Profilanlageseite 34 als Teil der Profileinspannung 20 an der Profiloberfläche 9 an.

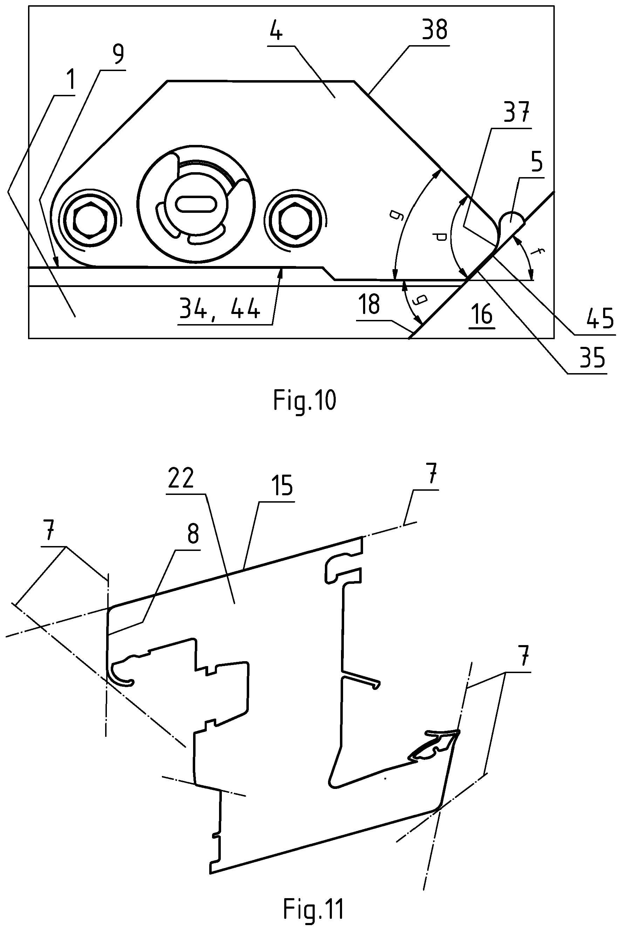

Die besondere Form des im vorliegenden Beispiel verwendeten Formwerkzeugs 4 ist in der Figur 10 dargestellt. Das Formwerkzeug 4 weist eine Profilanlageseite 34 auf, mit der es in seiner Ausgangsstellung 33 an der Profiloberfläche 9 anliegt und so ein Austreten von Schmelzgut 5 auf die als spätere Sichtfläche vorgesehene Profiloberfläche 9 zumindest weitgehend verhindert. An dem der Heizeinrichtung 18 zugewandten Ende des Formwerkzeuges 4 schließt sich an die Profilanlageseite 34 eine Schubfläche 35 an, die etwa parallel zu der Fügefläche 2 des Profilteils 1 verläuft.

Im vorliegenden Beispiel ist das Profilteil 1 auf Gehrung geschnitten, wobei der von der Längsrichtung 10 und der Fügefläche 2 des Profilteils 1 eingeschlossene Gehrungswinkel g vorliegend 45° beträgt. Die Schubfläche 35 verläuft unter einem Winkel f zur Längsrichtung 10 des Profilteils 1, der etwa größer oder gleich dem Gehrungswinkel g ist. Auf diese Weise wird das Schmelzgut 5, wie in Fig. 10 dargestellt, beim Anschmelzen zwischen der Heizfläche 18 und der Schubfläche 35 nach außen geleitet und lagert sich an einem Übergang 37 zu der Rückseite 38 des Formwerkzeugs 4 an. Der Übergang 37 ist vorliegend als Außenradius zu der unter dem Gehrungswinkel g zur Profilanlageseite 34 und unter einem rechten Winkel d zur Schubfläche 35 verlaufenden Rückseite 38 vorgesehen, wodurch sich das austretende Schmelzgut 5 dort als Wulst anlagern kann. Der Wulst und die Fügefläche 2 bleiben über einen Ansatz 45 miteinander verbunden. Der Ansatz 45 bildet sich in einem verbleibenden Spalt zwischen der Heizfläche 18 und der Schubfläche 35 aus.

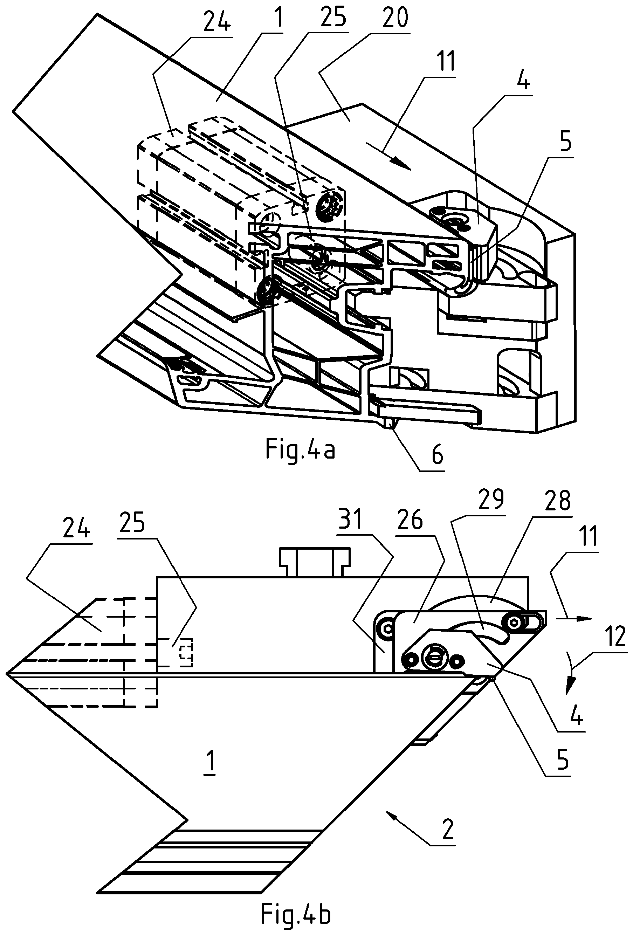

Das so ausgebildete Schmelzgut 5 wird im weiteren Fortgang des erfindungsgemäßen Verfahrens, wie in den Fig. 4a bis 6b dargestellt, unter Verwendung des Formwerkzeuges 4 auf die Fügefläche 2 verlagert und dabei verdrängt bzw. umgelegt oder umgeklappt.

In den Fig. 4a und 4b ist erkennbar, dass das an einem Führungsschlitten 26 und durch eine Steuerkontur 27 geführte Formwerkzeug 4 teilweise aus einer in die Profileinspannung 20 eingelassenen Werkzeugaufnahme 28 herausbewegt ist, so dass es sich aus seiner Ausgangsstellung 33 in eine erste Zwischenstellung 40 begeben hat. Dazu durchläuft das Formwerkzeug 4 zunächst eine parallel zur Längsrichtung 10 des Profilteils 1 erfolgende Linearbewegung 11, durch welche das Schmelzgut 5 unter der Wirkung der Schubfläche 35 bereits soweit verdrängt wird, dass es unter die im Weiteren als Formfläche 44 verwendete Profilanlageseite 34 des Formwerkzeugs 4 gerät. Sofern beim Anschmelzen des Profilteils 1 Schmelzgut auf die Profiloberfläche 9 gelangt ist, wird dieses durch die Linearbewegung zurück vor die Fügefläche 2 gedrängt. Beim Erreichen der in den Fig. 4a und 4b gezeigten Zwischenstellung 40 fährt der Führungsschlitten 26 gegen das als Anschlag dienende Ende einer Linearführung 30. Die von der Schubstange 25 übertragene Bewegung des Aktuators 24 wird dann mittels einer durch die Steuerkontur 27, den Führungsschlitten 26 und einen nicht gezeigten Ansatz in eine Kippbewegung 12 des Formwerkzeugs 4 um die Kippachse 7 umgelenkt, aufgrund derer das Formwerkzeug 4 um eine Kippachse 7 zur Fügefläche 2 kippt. Der nicht gezeigte Ansatz durchgreift den Führungsschlitten 26 und greift in die in einer dahinterliegenden Steuerplatte 31 ausgeführte Steuerkontur 27 ein und lenkt so die linear erfolgende Bewegung der Schubstange 25 in eine Kippbewegung 12 des Formwerkzeugs 4 um.

Das Formwerkzeug 4 ist bezüglich des Führungsschlittens 26 drehbar gelagert. Die so gebildete Kippführung 29 bewirkt ein Kippen des Formwerkzeugs 4 um die Kippachse 7. Die Kippachse 7 wird durch die Kippführung 29 soweit zum Kantenbereich 8 verlagert, dass die Kippachse 7 zumindest im Wesentlichen auf der Verbindungskante zwischen Profiloberfläche 9 und Fügefläche 2 liegt. Durch die Bewegung des Formwerkzeugs 4 wird das Schmelzgut 5 aus dem nach dem Verschweißen sichtbaren Bereich bewegt.

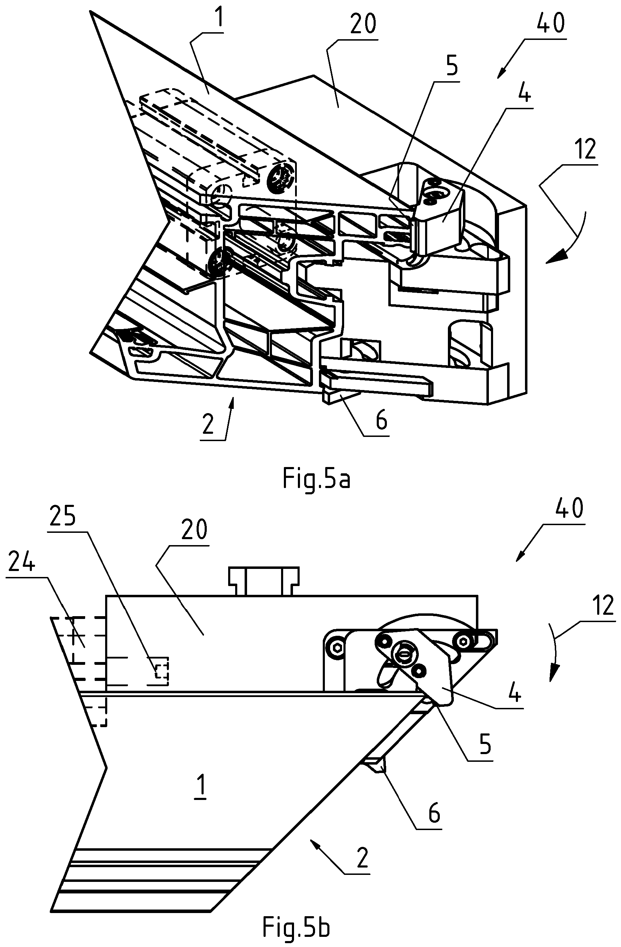

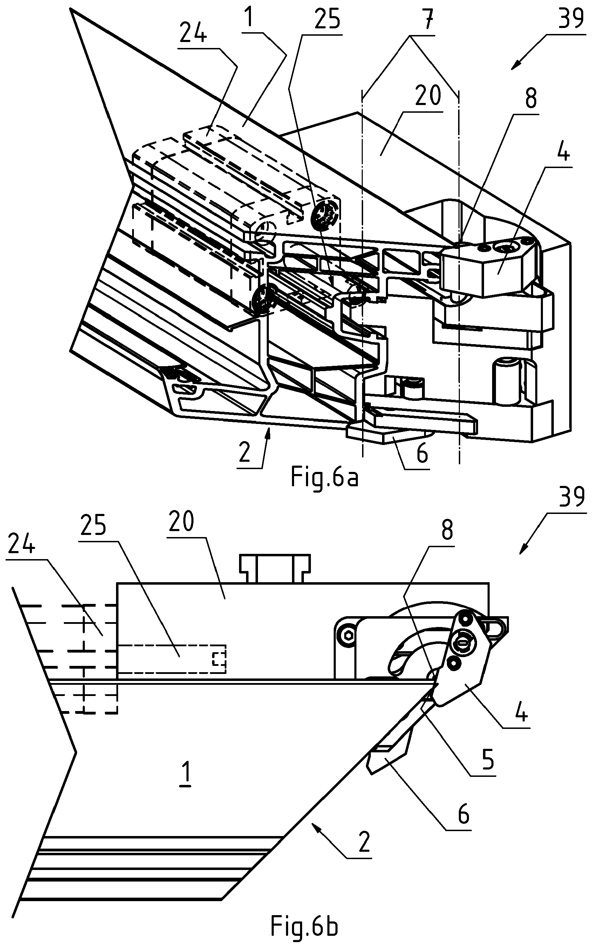

Das anschließende erfolgende Kippen des Formwerkzeugs 4 um die Kippachse 7 bewirkt dann ein Umklappen bzw. Umlegen des Schmelzgutes 5 auf die Fügefläche 2. Dabei überstreicht das Formwerkzeug 4 die in den Fig. 5a und 5b gezeigte zweite Zwischenstellung 40, bis es seine in Fig. 6a und 6b dargestellte Arbeitsstellung 39 erreicht.

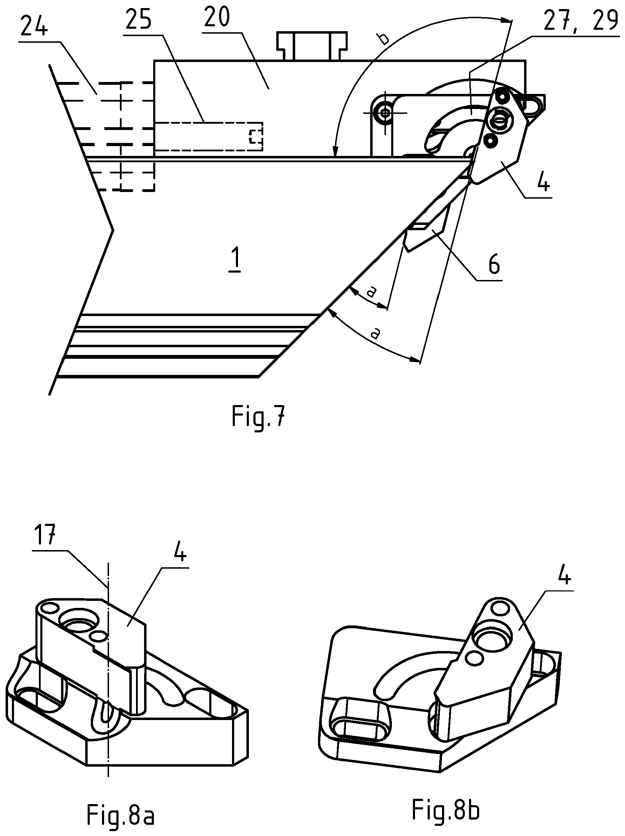

Der in der Fig. 7 eingezeichnete Winkel b ist der Kippwinkel, um den das Formwerkzeug 4 bevorzugt maximal kippen muss, um das Schmelzgut 5 zwischen der Formfläche 44 und der Fügefläche 2 in der vorgesehenen Weise einzuzwängen. Der Winkel a zwischen der Formfläche 44 und der Fügefläche 2 beträgt dabei vorzugsweise 30°. Mit der dargestellten, kombinierten Linear- und Kippführung 29 des Formwerkzeugs 29 kann der Winkel a bereits bei einem Kippwinkel b von nur etwa 120° erreicht werden. Denkbar ist alternativ auch eine reine Kippführung 29 für das Formwerkzeug 4, bei der das Formwerkzeug dann um etwa 180° schwenken muss.

In den Figuren 3a bis 7 ist noch ein zweites, parallel zu dem ersten Formwerkzeug 4 verfahrbares Formwerkzeug 6 zur Bearbeitung der Profilkontur eines anderen Kantenabschnittes 8 des Profilteils 1 dargestellt. Das Formwerkzeug 6 ist an einer eigenen Steuerplatte 32 und mit einem eigenen Führungsschlitten 36 geführt ist. Das Formwerkzeug 6 kann dabei eine synchrone Bewegung zu dem Formwerkzeug 4 ausführen und dazu dieselbe Aktorik, bspw. Aktuator 24 und Schubstange 25, verwenden. Es ist jedoch auch denkbar, das Formwerkzeug 6 unabhängig von dem Formwerkzeug 4 betätigbar auszuführen und entsprechend zu betätigen.

In den Fig. 8a und 8b ist das Formwerkzeug 4 zusammen mit dessen Führungsschlitten 26 dargestellt. Das Formwerkzeug ist mit einer Drehachse 17 in dem Führungsschlitten 26 von der Ausgangsstellung 33, wie sie in Fig. 8a gezeigt ist, zur Arbeitsstellung 39, wie in Fig. 8b dargestellt, schwenkbar geführt.

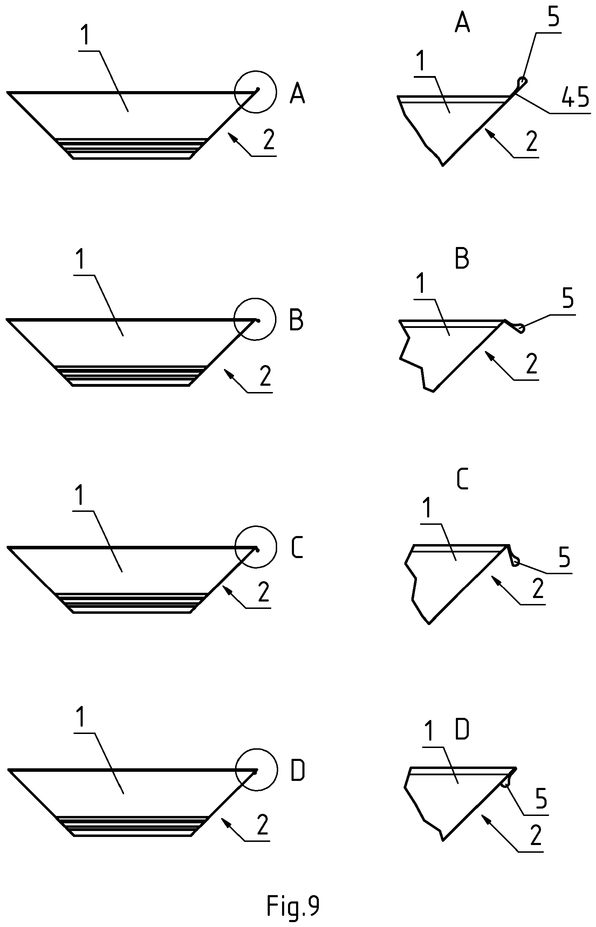

In der Fig. 9 ist schematisch der Verfahrensablauf zum Umlegen bzw. Umschlagen des Schmelzgutes 5 dargestellt. In Schritt A ist das Anschmelzen bereits erfolgt und das Schmelzgut 5 als Wulst mittels des Ansatzes 45 mit dem Profilteil 1 verbunden. In den Schritten B, C und D wird dann das Schmelzgut 5 um die "Wurzel" des Ansatzes 45 herum auf die Fügefläche 2 geklappt, wodurch ein Großteil des angeschmolzenen und ursprünglich nach außen getretenen Materials weiter nach Innen auf die die Fügefläche 2 geklappt wird, so dass kaum oder kein Schmelzgut beim anschließenden Stauchen mit einem weiteren Profilteil 3 über den Kantenbereich 8 nach außen tritt. Im Schritt B erfolgt zunächst ein Linearvorschub des Formwerkzeugs 4, bei welchem das Schmelzgut 5 bereits zum Teil bis vor die Fügefläche 2 verdrängt bzw. umgeklappt wird. Das Weitere Umklappen bzw. Verdrängen des Schmelzgutes 5 erfolgt dann im Schritt C, in welchem das Formwerkzeug 4 seinen Kippvorgang ausführt, bis es in die in Schritt D gezeigte Endstellung gelangt.

Durch den in Arbeitsstellung 39 spitz verlaufenden Winkel a zwischen der Fügefläche 2 und dem Formwerkzeug 4 ist jedenfalls auch bei stärker verflüssigtem und daher fließfähigem Schmelzgut 5 eine zuverlässige Verdrängung aus dem Kantenbereich 8 gegeben.

Schließlich ist in der Fig. 11 schematisch ein Beispiel für eine Profilkontur 15 eines eines Profilteils 1, 3 angegeben, bei der unterschiedliche Kantenbereiche 8 mit um eine Kippachse 7 kippbaren Formwerkzeug 4 bearbeitet werden können. Bei gekrümmten Kantenbereichen 8 kann die Kippachse 7 auch als Tangente zu dem jeweiligen Kantenabschnitt verlaufen.

Die vorliegende Erfindung eignet sich besonders für die Bearbeitung von den Kantenabschnitten 8, die nach dem Stauchen und zusammenfügen mit anderen Profilteilen 1, 3 Außenecken bzw. Außenkanten des Profilgebildes, beispielsweise Tür-oder Fensterrahmen, darstellen.

### Bezugszeichenliste

- 1: Profilteil
- 2: Fügefläche
- 3: Profilteil
- 4: Formwerkzeug
- 5: Schmelzgut
- 6: Formwerkzeug
- 7: Kippachse
- 8: Kantenabschnitt
- 9: Profiloberfläche
- 10: Längsrichtung
- 11: Linearbewegung
- 12: Kippbewegung
- 13: Fügefläche
- 14: Heizelement
- 15: Profilkontur
- 16: Heizeinrichtung
- 17: Drehachse des Formwerkzeugs in dessen Führung
- 18: Heizfläche
- 19: Profilträger
- 20: Profileinspannung
- 21: Profileinspannung
- 22: Fügefläche
- 23: Fügefläche
- 24: Aktuator
- 25: Schubstange
- 26: Führungsschlitten
- 27: Steuerkontur
- 28: Werkzeugaufnahme
- 29: Kippführung
- 30: Linearführung
- 31: Steuerplatte
- 32: Steuerplatte
- 33: Ausgangsstellung
- 34: Profilanlageseite
- 35: Schubfläche
- 36: Führungsschlitten
- 37: Übergang
- 38: Rückseite
- 39: Arbeitsstellung
- 40: Zwischenstellung
- 41: Schweißapparat
- 42: Profilauflage
- 43: Ein- und Ausfahrbewegung
- 44: Formfläche
- 45: Ansatz
- 46: Führung
- 47: Sichtfläche

- a: Winkel
- b: Kippwinkel
- d: Winkel
- f: Winkel
- g: Gehrungswinkel

- A: Verfahrensschritt
- B: Verfahrensschritt
- C: Verfahrensschritt
- D: Verfahrensschritt

## Patentansprüche

1. Schweißverfahren zum Verbinden von zwei Profilteilen (1, 3) aus Kunststoff, insbesondere aus einem Thermoplast, wobei eine Fügefläche (2) des einen Profilteils (1) zum Verbinden mit einer Fügefläche (13) des anderen Profilteils (3) angeschmolzen und wenigstens ein Formwerkzeug (4, 6) relativ zu dem einen Profilteil (1) bewegt wird, um an wenigstens einem Kantenabschnitt (8) der Fügefläche (2) austretendes Schmelzgut (5) zu verdrängen, **dadurch gekennzeichnet, dass** das wenigstens eine Formwerkzeug (4, 6) um den Kantenabschnitt (8) herum zur angeschmolzenen Fügefläche (2) des einen Profilteils (1) gekippt wird.

2. Schweißverfahren nach Anspruch 1, **dadurch gekennzeichnet, dass** das wenigstens eine Formwerkzeug (4, 6) um eine Achse (7) gekippt, die abschnittsweise mit einer die äußeren Querschnittsform des Profilteils (1) bestimmenden Profilkontur (15) im Wesentlichen zusammenfällt oder tangential dazu verläuft.

3. Schweißverfahren nach einem der vorhergehenden Ansprüche, **dadurch gekennzeichnet, dass** das wenigstens eine Formwerkzeug (4, 6) vor dem Ausführen der Kippbewegung (12) zusätzlich eine Linearbewegung (11) in Richtung der Fügefläche (2) ausführt, insbesondere derart, dass sich das wenigstens eine Formwerkzeug (4, 6) an dem wenigstens einen Profilteil (1) stirnseitig über die Fügefläche (2) hinausbewegt, um das Schmelzgut in Richtung auf die Fügefläche (2) zu verdrängen.

4. Schweißverfahren nach Anspruch 3, **dadurch gekennzeichnet, dass** die Linearbewegung (11) entlang einer äußeren Profiloberfläche (9), insbesondere in einer Längsrichtung (10) des Profilteils (1) erfolgt.

5. Schweißverfahren nach einem der Ansprüche 3 oder 4, **dadurch gekennzeichnet, dass** die Linearbewegung (11) und die Kippbewegung (12) des wenigstens einen Formwerkzeuges (4, 6) sich wenigstens teilweise einander überlagern oder nacheinander erfolgen.

6. Schweißverfahren nach einem der vorhergehenden Ansprüche, **dadurch gekennzeichnet, dass** das wenigstens eine Formwerkzeug (4, 6) soweit kippt, dass zwischen der Fügefläche (2) und der der Fügefläche (2) zugewandten Formfläche (44) des Formwerkzeugs (4, 6) ein spitzer Winkel a verbleibt, wobei bevorzugt 20° ≥ a ≤ 45° gilt, besonders bevorzugt 25° ≥ a ≤ 40°, insbesondere a = 30°.

7. Schweißverfahren nach einem der vorhergehenden Ansprüche, **dadurch gekennzeichnet, dass** das wenigstens ein Formwerkzeug (4, 6) aus seiner das Schmelzgut verdrängenden Arbeitsstellung (39) in eine Ausgangsstellung (33) zurück bewegt wird, um die Fügefläche (2) des zumindest einen Profilteils (1) erneut anzuschmelzen.

8. Schweißverfahren nach Anspruch 7, **dadurch gekennzeichnet, dass** das wenigstens eine Formwerkzeug (4, 6) nach dem erneuten Anschmelzen wieder in seine Arbeitsstellung (39) bewegt wird, um das Schmelzgut in Richtung auf die Fügefläche des Profilteils umzulegen, wobei der Kippwinkel (b) vorzugsweise variiert werden kann.

9. Schweißvorrichtung, zum Verbinden von wenigstens zwei Profilteilen (1, 3) aus Kunststoff, insbesondere aus einem Thermoplast, mit Profilträgern (19) zum Festlegen der beiden Profilteile (1, 3) und einer Heizeinrichtung (16) zum Anschmelzen wenigstens einer Fügefläche (2, 13) wenigstens eines Profilteils (1, 3), wobei wenigstens ein Formwerkzeug (4, 6) aus einer Ausgangsstellung (33) in Richtung einer Arbeitsstellung (39) relativ zu zumindest einem der Profilteile (1, 3) bewegbar ist, um an wenigstens einem Kantenabschnitt (8) der Fügefläche (2, 13) austretendes Schmelzgut (5) zu verdrängen, **dadurch gekennzeichnet, dass** das wenigstens eine Formwerkzeug (4, 6) aus seiner Ausgangsstellung zur Fügefläche (2) des einen Profilteils (1) um den Kantenabschnitt (8) des Profilteils herum kippbar ist.

10. Schweißvorrichtung nach Anspruch 9, **dadurch gekennzeichnet, dass** das wenigstens eine Formwerkzeug (4, 6) zusätzlich linearbeweglich geführt ist.

11. Schweißvorrichtung nach einem der Ansprüche 9 oder 10, **dadurch gekennzeichnet, dass** das wenigstens eine Formwerkzeug (4, 6) in einer an dem Profilträger (19) vorgesehenen Kulissenführung geführt ist.

12. Schweißvorrichtung nach einem der Ansprüche 9 bis 11, **dadurch gekennzeichnet, dass** das wenigstens eine Formwerkzeug (4, 6) mittels eines Aktuators (24), insbesondere eines Linearaktuators, bewegbar ist, oder durch eine Kopplung mit einer Mitnahmebewegung des Profilträgers (19) betätigbar ist.

13. Schweißvorrichtung nach einem der vorhergehenden Ansprüche 9 bis 12, **dadurch gekennzeichnet, dass** das wenigstens eine Formwerkzeug (4, 6) bereichsweise, insbesondere an seiner der Heizeinrichtung (16) zugewandten Seite, beheizt ist, vorzugsweise auf 80° C bis 280° C, bevorzugt auf 140°C bis 210°C, besonders bevorzugt auf 150°C.

14. Schweißvorrichtung nach einem der vorhergehenden Ansprüche 9 bis 13, **dadurch gekennzeichnet, dass** das Formwerkzeug (4, 6) wenigstens eine Profilanlageseite (34) und eine der Heizeinrichtung (16) zugewandte Seite aufweist, die etwa unter dem zwischen einer Längsrichtung (10) und der Fügefläche (2) eingeschlossenen Gehrungswinkel (g) verlaufen.

## Claims

1. Welding method for connecting two profiled parts (1, 3) composed of plastic, in particular composed of a thermoplastic, wherein a joining surface (2) of the one profiled part (1) is melted for connection to a joining surface (13) of the other profiled part (3), and at least one forming tool (4, 6) is moved relative to the one profiled part (1) in order to displace molten material (5) exiting at at least one edge portion (8) of the joining surface (2), **characterized in that** the at least one forming tool (4, 6) is tilted around the edge portion (8) to the melted joining surface (2) of the one profiled part (1).

2. Welding method according to Claim 1, **characterized in that** the at least one forming tool (4, 6) is tilted about an axis (7) which in certain portions substantially coincides with, or runs tangentially to, a profile contour (15) which determines the outer cross-sectional shape of the profiled part (1).

3. Welding method according to either of the preceding claims, **characterized in that**, prior to performing the tilting movement (12), the at least one forming tool (4, 6) additionally performs a linear movement (11) in the direction of the joining surface (2), in particular in such a way that at the end side of the at least one profiled part (1) the at least one forming tool (4, 6) is moved beyond the joining surface (2) in order to displace the molten material in the direction of the joining surface (2).

4. Welding method according to Claim 3, **characterized in that** the linear movement (11) is performed along an outer profiled surface (9), in particular in a longitudinal direction (10) of the profiled part (1).

5. Welding method according to either of Claims 3 and 4, **characterized in that** the linear movement (11) and the tilting movement (12) of the at least one forming tool (4, 6) at least partially overlap or are performed in succession.

6. Welding method according to one of the preceding claims, **characterized in that** the at least one forming tool (4, 6) tilts to such an extent that an acute angle a remains between the joining surface (2) and that forming surface (44) of the forming tool (4, 6) which faces the joining surface (2), wherein preferably 20° ≥ a ≤ 45° applies, particularly preferably 25° ≥ a ≤ 40°, in particular a = 30°.

7. Welding method according to one of the preceding claims, **characterized in that** the at least one forming tool (4, 6) is moved from its working position (39), in which it displaces the molten material, back into a starting position (33) in order for the joining surface (2) of the at least one profiled part (1) to be remelted.

8. Welding method according to Claim 7, **characterized in that**, after the remelting, the at least one forming tool (4, 6) is moved back into its working position (39) in order to turn the molten material in the direction of the joining surface of the profiled part, wherein the tilt angle (b) can preferably be varied.

9. Welding apparatus, for connecting at least two profiled parts (1, 3) composed of plastic, in particular composed of a thermoplastic, having profile carriers (19) for fixing of the two profiled parts (1, 3) and a heating device (16) for melting of at least one joining surface (2, 13) of at least one profiled part (1, 3), wherein at least one forming tool (4, 6) can be moved from a starting position (33) in the direction of a working position (39) relative to at least one of the profiled parts (1, 3) in order to displace molten material (5) exiting at at least one edge portion (8) of the joining surface (2, 13), **characterized in that** the at least one forming tool (4, 6) can be tilted from its starting position to the joining surface (2) of the one profiled part (1) around the edge portion (8) of the profiled part.

10. Welding apparatus according to Claim 9, **characterized in that** the at least one forming tool (4, 6) is additionally guided in a linearly movable manner.

11. Welding apparatus according to either of Claims 9 and 10, **characterized in that** the at least one forming tool (4, 6) is guided in a slotted guide provided on the profile carrier (19).

12. Welding apparatus according to one of Claims 9 to 11, **characterized in that** the at least one forming tool (4, 6) can be moved by means of an actuator (24), in particular a linear actuator, or can be actuated by a coupling to a driving movement of the profile carrier (19).

13. Welding apparatus according to one of preceding Claims 9 to 12, **characterized in that** the at least one forming tool (4, 6) is heated in certain regions, in particular on its side facing the heating device (16), preferably to 80°C to 280°C, preferably to 140°C to 210°C, particularly preferably to 150°C.

14. Welding apparatus according to one of preceding Claims 9 to 13, **characterized in that** the forming tool (4, 6) has at least one profile abutment side (34) and a side facing the heating device (16), which run approximately at the mitre angle (g) enclosed between a longitudinal direction (10) and the joining surface (2).

## Revendications

1. Procédé de soudage pour la liaison de deux parties profilées (1, 3) en matière plastique, notamment en un thermoplastique, une surface d'assemblage (2) d'une partie profilée (1) étant fondue pour la liaison avec une surface d'assemblage (13) de l'autre partie profilée (3) et au moins un outil de moulage (4, 6) étant déplacé par rapport à la partie profilée (1), afin de refouler la masse fondue (5) sortant au niveau d'au moins une section de bord (8) de la surface d'assemblage (2), **caractérisé en ce que** l'au moins un outil de moulage (4, 6) est basculé autour de la section de bord (8) vers la surface d'assemblage fondue (2) de la partie profilée (1).

2. Procédé de soudage selon la revendication 1, **caractérisé en ce que** l'au moins un outil de moulage (4, 6) est basculé autour d'un axe (7) qui coïncide en sections essentiellement avec un contour profilé (15) déterminant la forme de section transversale extérieure de la partie profilée (1) ou s'étend tangentiellement à celui-ci.

3. Procédé de soudage selon l'une quelconque des revendications précédentes, **caractérisé en ce que** l'au moins un outil de moulage (4, 6) réalise en outre, avant la réalisation du mouvement de basculement (12), un mouvement linéaire (11) en direction de la surface d'assemblage (2), notamment de telle sorte que l'au moins un outil de moulage (4, 6) se déplace sur l'au moins une partie profilée (1) côté frontal sur la surface d'assemblage (2), afin de refouler la masse fondue en direction de la surface d'assemblage (2).

4. Procédé de soudage selon la revendication 3, **caractérisé en ce que** le mouvement linéaire (11) a lieu le long d'une surface profilée extérieure (9), notamment dans une direction longitudinale (10) de la partie profilée (1).

5. Procédé de soudage selon l'une quelconque des revendications 3 ou 4, **caractérisé en ce que** le mouvement linéaire (11) et le mouvement de basculement (12) de l'au moins un outil de moulage (4, 6) se superposent au moins partiellement ou ont lieu l'un après l'autre.

6. Procédé de soudage selon l'une quelconque des revendications précédentes, **caractérisé en ce que** l'au moins un outil de moulage (4, 6) est basculé dans une mesure telle qu'un angle aigu a demeure entre la surface d'assemblage (2) et la surface de moulage (44) de l'outil de moulage (4, 6) tournée vers la surface d'assemblage (2), avec de préférence 20° ≥ a ≤ 45 °, de manière particulièrement préférée 25° ≥ a ≤ 40 °, notamment a = 30°.

7. Procédé de soudage selon l'une quelconque des revendications précédentes, **caractérisé en ce que** l'au moins un outil de moulage (4, 6) est déplacé en retour à partir de sa position de travail (39) refoulant la masse fondue dans une position initiale (33), afin de faire fondre de nouveau la surface d'assemblage (2) de l'au moins une partie profilée (1).

8. Procédé de soudage selon la revendication 7, **caractérisé en ce que** l'au moins un outil de moulage (4, 6) est encore déplacé dans sa position de travail (39) après la nouvelle fusion, afin de rabattre la masse fondue en direction de la surface d'assemblage de la partie profilée, l'angle de basculement (b) pouvant de préférence être varié.

9. Dispositif de soudage, pour la liaison d'au moins deux parties profilées (1, 3) en matière plastique, notamment en un thermoplastique, comprenant des supports de profilé (19) pour l'immobilisation des deux parties profilées (1, 3) et un appareil chauffant (16) pour la fusion d'au moins une surface d'assemblage (2, 13) d'au moins une partie profilée (1, 3), au moins un outil de moulage (4, 6) pouvant être déplacé à partir d'une position initiale (33) en direction d'une position de travail (39) par rapport à au moins une des parties profilées (1, 3), afin de refouler la masse fondue (5) sortant au niveau d'au moins une section de bord (8) de la surface d'assemblage (2, 13), **caractérisé en ce que** l'au moins un outil de moulage (4, 6) peut être basculé à partir de sa position initiale vers la surface d'assemblage (2) de la partie profilée (1) autour de la section de bord (8) de la partie profilée.

10. Dispositif de soudage selon la revendication 9, **caractérisé en ce que** l'au moins un outil de moulage (4, 6) est en outre guidé selon un mouvement linéaire.

11. Dispositif de soudage selon l'une quelconque des revendications 9 ou 10, **caractérisé en ce que** l'au moins un outil de moulage (4, 6) est guidé dans un guide à coulisse prévu sur le support de profilé (19).

12. Dispositif de soudage selon l'une quelconque des revendications 9 à 11, **caractérisé en ce que** l'au moins un outil de moulage (4, 6) peut être déplacé au moyen d'un actionneur (24), notamment d'un actionneur linéaire, ou peut être actionné par un couplage avec un mouvement d'entraînement du support de profilé (19).

13. Dispositif de soudage selon l'une quelconque des revendications 9 à 12 précédentes, **caractérisé en ce que** l'au moins un outil de moulage (4, 6) est chauffé en zones, notamment sur son côté tourné vers l'appareil chauffant (16), de préférence à 80 °C à 280 °C, de préférence à 140 °C à 210 °C, de manière particulièrement préférée à 150 °C.

14. Dispositif de soudage selon l'une quelconque des revendications 9 à 13 précédentes, **caractérisé en ce que** l'outil de moulage (4, 6) comprend au moins un côté d'application contre le profilé (34) et un côté tourné vers l'appareil chauffant (16), qui s'étendent approximativement à l'angle d'onglet (g) compris entre une direction longitudinale (10) et la surface d'assemblage (2).
